# EUROPÄISCHE PATENTANMELDUNG

(11) **EP 4 186 831 A1**
(43) Veröffentlichungstag der Anmeldung: **31.05.2023**
(21) Anmeldenummer: 22209632.3
(22) Anmeldetag: 25.11.2022
(51) Int. Cl.: B65G 47/86

(54) **KLAMMERVORRICHTUNG ZUM HALTEN EINES BEHÄLTERS**

(30) Priorität: 25.11.2021 DE 102021131001
(71) Anmelder: KRONES AG, 93073 Neutraubling (DE)
(72) Erfinder: Spandl, Stefan, 93073 Neutraubling (DE); Landler, Bruno, 93073 Neutraubling (DE)
(74) Vertreter: Nordmeyer, Philipp Werner

(57) **Zusammenfassung**

Die vorliegende Erfindung betrifft eine Klammervorrichtung (1) zum Halten eines Behälters in einer Behälterbehandlungsvorrichtung, bevorzugt zum Halten eines Getränkebehälters in einem Halsabschnitt, umfassend zwei Klammerarme (10) mit einem Halteabschnitt (11) zum Halten des zu haltenden Behälters und einen um eine Steuernockenschwenkachse (21) schwenkbaren Steuernocken (20), wobei die Klammerarme (10) und der Steuernocken (20) über einen Koppelmechanismus (30) gekoppelt sind, so dass ein Schwenken des Steuernockens (20) um seine Steuernockenschwenkachse (21) ein Schwenken der Klammerarme (10) relativ zueinander bewirkt, und der Koppelmechanismus (30) zumindest ein Paar aus einer Langlochnut (31) und einem in der Langlochnut (31) geführten Steuerbolzen (32) zum Übertragen von Bewegungen des Steuernockens (20) auf die Klammerarme (10) umfasst.

## Beschreibung

### Technisches Gebiet

Die vorliegende Erfindung betrifft eine Klammervorrichtung zum Halten eines Behälters in einer Behälterbehandlungsvorrichtung, beispielsweise zum Halten eines Getränkebehälters in einem Halsabschnitt, um diesen innerhalb einer Getränkeabfüllanlage zu befüllen oder zu verschließen.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt ist.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelement, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Aus der EP 0 939 044 A1 ist ein Flaschengreifer bekannt, bei welchem eine Greifvorrichtung vorgesehen ist, welche zwei Greifarme aufweist, die mittels eines Steuernockens in eine Halteposition oder eine Löseposition bringbar sind. Der Steuernocken wirkt mit einer an jedem Greifarm ausgebildeten Anlagefläche zusammen und die Anlagefläche ist als Bestandteil eines elastischen Kissens ausgebildet, welches an dem jeweiligen Greifarm angeordnet ist.

Aus der EP 2 143 674 A2 ist eine aktive Klammervorrichtung zum Halten von Behältern bekannt, bei welchen zwei Greifarme beziehungsweise Klammerarme mit separaten Magnetanordnungen in einer geöffneten Position gehalten werden. Die Klammerarme weisen nach hinten orientierte Schließhebel auf, welche mit einem dazwischen angeordneten Schließnocken zusammenwirken, um die Klammerarme aus der geöffneten Position in eine geschlossene Position zu bringen.

Die DE 10 2005 014 838 A1 zeigt eine aktive Klammervorrichtung zum Halten von Gefäßen mit zwei Klammerarmen, die zum Öffnen und Schließen relativ zueinander beweglich sind. Um ein sicheres Halten der Gefäße zu ermöglichen, ist ein Greifarm der Klammer formstabil und der andere Greifarm formelastisch ausgebildet. Die Greifarme werden mittels daran angeordneter Magneten in eine geöffnete Position vorgespannt und mittels eines Steuernockens in die geschlossene Position geschwenkt.

Bei Klammervorrichtungen mit einseitiger Vorspannung der Klammerarme in eine Position, die durch Betätigung des Steuernockens entgegen der Vorspannung in eine andere Position bewegt werden können, und durch Lösen beziehungsweise erneutes Schalten des Steuernockens von selbst in die eine vorgespannte Position zurückbewegt werden, ist der Vorgang des vorspannungsbedingten Rückbewegens mit einer gewissen Trägheit behaftet. Demgemäß kann es zu ruckartigem Greifen des Behälters und ruckartigem Lösen des Haltens des Behälters kommen. Ferner kann es bei derartigen aktiven Klammervorrichtungen zu einem hohen Verschleiß zwischen Klammerarmen und Steuernocken kommen, da letzterer stets gegen die einseitig gerichtete Vorspannung arbeiten muss.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters in einem Halsabschnitt bereitzustellen.

Die Aufgabe wird durch eine Klammervorrichtung zum Halten eines Behälters in einer Behälterbehandlungsvorrichtung, bevorzugt zum Halten eines Getränkebehälters in einem Halsabschnitt, mit den Merkmalen des Anspruchs 1 gelöst. Vorteilhafte Weiterbildungen ergeben sich aus den Unteransprüchen, der Beschreibung und den Figuren.

Entsprechend wird eine Klammervorrichtung zum Halten eines Behälters in einer Behälterbehandlungsvorrichtung, bevorzugt zum Halten eines Getränkebehälters an einem Halsabschnitt, vorgeschlagen, umfassend zwei Klammerarme mit einem Halteabschnitt zum Halten des zu haltenden Behälters und einen um eine Steuernockenschwenkachse schwenkbaren Steuernocken, wobei die Klammerarme und der Steuernocken über einen Koppelmechanismus gekoppelt sind, so dass ein Schwenken des Steuernockens um seine Steuernockenschwenkachse ein Schwenken der Klammerarme relativ zueinander bewirkt.

Der Koppelmechanismus umfasst zumindest ein Paar aus einer Langlochnut und einem in der Langlochnut geführten Steuerbolzen zum Übertragen von Bewegungen des Steuernockens auf die Klammerarme.

Anders ausgedrückt sind die Klammerarme und der Steuernocken über zumindest eine Langlochnut und einen der Langlochnut zugeordneten und in der Langlochnut geführten Steuerbolzen zum Übertragen von Bewegungen des Steuernockens auf die Klammerarme gekoppelt, so dass ein Schwenken des Steuernockens um seine Steuernockenschwenkachse ein Schwenken der Klammerarme relativ zueinander bewirkt. Die vorbeschriebene Kopplung kann als Koppelmechanismus verstanden werden.

Dadurch, dass der Koppelmechanismus zumindest ein Paar aus einer Langlochnut und einem in der Langlochnut geführten Steuerbolzen zum Übertragen von Bewegungen des Steuernockens auf die Klammerarme umfasst, kann eine dauerhafte, sprich permanente Zwangsführung zumindest eines Klammerarmes durch den Steuernocken bereitgestellt werden. Anders ausgedrückt ist aufgrund der (via des Koppelmechanismus bereitgestellten) Koppelung die Position und eine Bewegung der Klammerarme von der Position und einer Bewegung des Steuernockens stets vorgegeben.

Entsprechend kann verhindert werden, dass die Klammerarme und der Steuernocken bei einem Schaltimpuls auf den Steuernocken, welcher eine abrupte Bewegung des Steuernockens erzeugt, kurzzeitig außer Eingriff gelangen beziehungsweise den Kontakt zueinander verlieren, wie es bei einseitig vorgespannten konventionellen Klammervorrichtungen der Fall sein kann, etwa bei ungenügender Federkraft der einseitigen Vorspannung, um dann wieder aneinander zu stoßen. Das Greifen und Loslassen des durch die Klammervorrichtung zu haltenden Behälters kann mithin vergleichsweise sanft erfolgen, ohne, dass unkontrollierte Stöße beim Öffnen oder Schließen der Klammerarme auftreten.

Ferner kann durch die permanent vorhandene Führung, bereitgestellt durch das Paar aus Langlochnut und Steuerbolzen, eine definierte Anlage der Halteabschnitte an den zu haltenden Behälter erzielt werden.

Eine derartig ausgebildete Klammervorrichtung kann folglich in Vergleich zu herkömmlichen Vorrichtungen während des Betriebs einen besonders niedrigen Verschleiß unterliegen, insbesondere in Bereichen, in welchen die Klammerarme und der Steuernocken gekoppelt sind, was sich wiederum positiv auf die Lebensdauer der Komponenten der Klammervorrichtung auswirkt.

Hinsichtlich einer die Klammervorrichtung aufweisenden Behälterbehandlungsvorrichtung können im Vergleich zu Behälterbehandlungsvorrichtungen mit herkömmlichen Klammervorrichtungen die Wartungsintervalle aufgrund des verringerten Verschleißes vergrößert sein.

Ferner kann durch das stets zwangsgeführte Bewegen der Halteabschnitte und des Reduzierens im Vergleich zu herkömmlichen Klammervorrichtungen beziehungsweise gar des Vermeidens des Auftretens von Stößen während des Öffnens und/oder Schließens der Klammerarme, gesteuert durch den Steuernocken, ein Beschädigen des zu haltenden Behälters und/oder ein Austreten von im Behälter befindlichen Füllguts, etwa einem Getränk, und von damit einhergehenden Kontaminationen der Klammervorrichtung und anderen Bereichen einer die Klammervorrichtung Behälterbehandlungsvorrichtung und der Außenseite des Behälters reduziert oder gar vermieden werden.

Der Ausdruck "Schwenkachse" wird als geometrische Achse verstanden, welche einen Rotationsmittelpunkt darstellt, und beschreibt in diesem Dokument insbesondere eine feste Schwenkachse, mithin eine hinsichtlich der Klammervorrichtung ortsfest angeordnete Achse. Eine sich verschiebende Achse im Sinne eines Momentanpols wird mithin nicht als "Schwenkachse" verstanden. Ein sich in einer Ebene zugleich rotatorisch und translatorisch bewegender Körper führt kein Schwenken um eine feste Achse auf, er weist demgemäß keine Schwenkachse wie sie hier verstanden wird auf.

Die geometrische Schwenkachse kann selbstredend in Form einer mechanischen Achse beziehungsweise Welle in an sich bekannter Weise bereitgestellt beziehungsweise ausgebildet sein. Beispielsweise kann ein Achszapfen, ein Stift oder ein Bolzen an einer Trägerplatte der Klammervorrichtung angeordnet sein, an welchem beispielsweise ein Klammerarm im Sinne eine Welle-Nabe-Verbindung schwenkbar gelagert ist. Weiterhin kann beispielsweise der Steuernocken einen Wellenabschnitt umfassen, welcher in einer Bohrung in der Trägerplatte drehbar gelagert ist.

Als "Langlochnut" wird hier eine Nut verstanden, die im Wesentlichen die Form eines Langlochs aufweist, mithin sich in einer Längserstreckung von einem ersten Ende zu einem zweiten Ende erstreckt und zwischen den beiden Enden im Wesentlichen parallel zueinander verlaufende, anders ausgedrückt quer zur Längserstreckung mit einem festen Abstand zueinander verlaufende Seitenwände umfasst, welche vorzugsweise gerade verlaufen, mithin einen unendlichen Krümmungsradius aufweisen.

Die Längserstreckung der Langlochnut ist hierbei bezogen auf eine senkrecht zur Steuernockenschwenkachse orientierte Ebene. Mit anderen Worten ist die Langloch-Form der Langlochnut betrachtet in Richtung der Steuernockenschwenkachse zu erkennen.

Die Langlochnut erstreckt sich im Sinne einer Nut als Vertiefung in einen Körper mit der zuvor beschriebenen Langloch-Form, und zwar in Richtung der Steuernockenschwenkachse mit einer vorgegebenen Tiefe und/oder zumindest teilweise durch den gesamten Körper.

Gemäß einer bevorzugten Ausführungsform sind die Halteabschnitte durch das Schwenken des Steuernockens in eine Öffnungsposition und/oder in eine Schließposition bewegbar.

Weiterhin können die Klammerarme alternativ oder zusätzlich in einer senkrecht zur Steuernockenschwenkachse orientierten Ebene schwenkbar angeordnet sein.

Vorzugsweise sind die die Klammerarme um zumindest eine parallel zur Steuernockenschwenkachse orientierte Schwenkachse schenkbar, wobei bevorzugt jeder Klammerarm jeweils eine Schwenkachse aufweist, um welche er schwenkbar ausgebildet ist.

Ein besonders kompakter Aufbau und zudem eine günstige Kraftverteilung hinsichtlich über den Steuernocken eingeleiteter Kräfte und einer durch die Halteabschnitte auf den darin gehaltenen Behälter ausgeübten Kraft, sowie hinsichtlich eines Verhältnisses in Bezug auf einen Bewegungsumfang des Steuernockens gegenüber dem Bewegungsumfang der Halteabschnitte kann erzielt werden, wenn die Halteabschnitte, bevorzugt bezogen auf die zumindest eine Schwenkachse, auf einer Seite der Klammerarme angeordnet sind und das zumindest eine Paar aus Langlochnut und Steuerbolzen auf der anderen Seite angeordnet ist.

Gemäß einer weiteren bevorzugten Ausführungsform sind die zumindest eine Langlochnut auf Seiten der Klammerarme angeordnet und der zumindest eine Steuerbolzen am Steuernocken angeordnet. Mit anderen Worten kann zumindest einer der Klammerarme eine Langlochnut umfassen, in welcher der dieser Langlochnut zugeordnete, am Steuernocken angeordnete Steuerbolzen geführt ist.

Alternativ oder zusätzlich kann zumindest ein Steuerbolzen auf Seiten der Klammerarme angeordnet sein und die diesem Steuerbolzen zugeordnete zumindest eine Langlochnut am Steuernocken angeordnet sein. Anders ausgedrückt kann zumindest einer der Klammerarme einen Steuerbolzen umfassen, welcher in der diesem Steuerbolzen zugeordneten, am Steuernocken angeordneten Langlochnut geführt ist.

Gemäß einer weiteren bevorzugten Ausführungsform umfasst der Koppelmechanismus zwei Paare aus Langlochnut und Steuerbolzen, wobei jeweils ein Paar aus Langlochnut und Steuerbolzen jeweils einen Klammerarm mit dem Steuernocken koppelt.

Alternativ kann der Koppelmechanismus auch genau ein Paar aus Langlochnut und Steuerbolzen umfassen, wobei das Paar aus Langlochnut und Steuerbolzen einen der Klammerarme mit dem Steuernocken koppelt und dieser Klammerarm mit dem anderen Klammerarm drehgekoppelt ist, bevorzugt über ein Getriebe, besonders bevorzugt ein Verzahnungsgetriebe.

Mit anderen Worten umfasst der Koppelmechanismus gemäß der vorstehenden Ausführungsform das genau eine Paar aus Langlochnut und Steuerbolzen, um über eine Bewegung des Steuernockens den ersten Klammerarm zu bewegen, und ferner umfasst der Koppelmechanismus ein Drehkopplungseinheit zum Koppeln des ersten Klammerarmes mit dem zweiten Klammerarm, welcher nicht selbst direkt mit dem Steuerbolzen gekoppelt ist. Die Drehkopplungseinheit ist bevorzugt in Form eines Getriebes, besonders bevorzugt eines Verzahnungsgetriebes, ausgebildet. Der Steuernocken ist folglich mit einem Klammerarm über das Paar aus Langlochnut und Steuerbolzen direkt beziehungsweise unmittelbar gekoppelt und mit dem anderen Klammerarm über den direkt gekoppelten Klammerarm und die Drehkoppeleinheit mittelbar gekoppelt.

Vorteilhafterweise weisen beide Klammerarme jeweils einen zahnradförmigen Verzahnungsabschnitt auf, die bevorzugt im Wesentlichen konzentrisch zu der Schenkachse des jeweiligen Klammerarmes angeordnet sind und sich senkrecht zu dieser erstrecken. Die Verzahnungsabschnitte stehen miteinander in Eingriff, so dass dadurch die Drehkopplung zwischen den Klammerarmen ausgebildet ist.

Es hat sich als vorteilhaft herausgestellt, zumindest einen Steuerbolzen relativ zur Steuernockenschwenkachse exzentrisch anzuordnen.

Da der zumindest eine Steuerbolzen exzentrisch zur Steuernockenschwenkachse angeordnet ist, liegen vorgenannte nicht konzentrisch zueinander vor. Vielmehr weisen die Steuernockenschwenkachse und der zumindest eine Steuerbolzen, insbesondere ein Längsmittelachse des Steuernockens in einer senkrecht zur Steuernockenschwenkachse orientierten Ebene einen Abstand zueinander auf. Der Abstand kann ein veränderlicher Abstand sein, beispielsweise, wenn der zumindest eine Steuerbolzen auf Seiten der Klammerarme, mit anderen Worten an einem der Klammerarme, angeordnet ist, mit nochmals anderen Worten, wenn einer der Klammerarme den Steuerbolzen aufweist.

Gemäß einer weiteren bevorzugten Ausführungsform ist ein erstes Langloch an einem ersten Klammerarm angeordnet und weist einen ersten Abstand zur Schwenkachse des ersten Klammerarms auf, und ferner ist ein zweites Langloch am zweiten Klammerarm angeordnet und weist einen zweiten Abstand zur Schwenkachse des zweiten Klammerarms auf. Vorzugsweise ist der Betrag des zweiten Abstands größer ist als der Betrag des ersten Abstands, und ferner ist bevorzugt ein in der ersten Langlochnut geführter erster Steuerbolzen mit einem ersten Abstand zur Steuernockenschwenkachse am Steuernocken angeordnet und ist ein in der zweiten Langlochnut geführter zweiter Steuerbolzen mit einem zweiten Abstand zur Steuernockenschwenkachse, dessen Betrag größer ist als jener des ersten Abstands, am Steuernocken angeordnet. Dadurch kann ein besonders kompakter Aufbau der Klammervorrichtung erzielt werden.

Die vorstehenden Abstände sind dabei vorzugsweise so gewählt, dass das durch das erste Paar aus erster Langlochnut und erstem Steuerbolzen bereitgestellte Übersetzungsverhältnis im Wesentlichen dem durch das zweite Paar aus zweiter Langlochnut und zweitem Steuerbolzen bereitgestellten Übersetzungsverhältnis entspricht. Dann kann ein symmetrisches Schwenken beider Klammerarme erzielt werden.

Gemäß einer weiteren bevorzugten Ausführungsform ist zumindest eine Langlochnut zumindest teilweise als Durchgangsbohrung ausgebildet und/oder ist zumindest eine Langlochnut zumindest teilweise als Sacklochbohrung ausgebildet und/oder ist zumindest eine Langlochnut einseitig offen ausgebildet und/oder ist zumindest eine Langlochnut zweiseitig offen ausgebildet.

Gemäß einer weiteren bevorzugten Ausführungsform umfasst der zumindest eine Steuerbolzen einen bezogen auf eine Längsmittelachse des Steuerbolzens gekrümmten Abschnitt, bevorzugt einen kreisbogenförmigen Abschnitt. Der Steuerbolzen kann dann in der Langlochnut relativ zu dieser einer rotatorische Bewegung ausführen, mithin an einer Wand der Langlochnut gleiten und/oder abrollen.

Alternativ oder zusätzlich kann zumindest ein Steuerbolzen einen sich in einer senkrecht zur Steuernockenschwenkachse orientierten Ebene erstreckenden Nockenabschnitt aufweisen. Durch den Nockenabschnitt kann eine rotatorische Bewegung des Steuerbolzens relativ zur Langlochnut hinsichtlich ihres Umfangs auf einen vorgegebenen Betrag beschränkt werden. Beispielsweise kann der Steuernocken als Anschlag für eine Seitenwand des Langlochnut fungieren.

Ein besonders verschleißarmer Betrieb der Klammervorrichtung kann erzielt werden, wenn die Klammerarme, der Steuernocken und der Koppelmechanismus derart ausgebildet sind, dass ein Schwenken des Steuernockens zwischen einer Offenvorgabeposition und einer Schließvorgabeposition ein Bewegen der Halteabschnitte durch Schwenken der Klammerarme relativ zueinander zwischen einer Öffnungsposition und/oder einer Schließposition bewirkt, wobei der Steuernocken bezogen auf eine Ebene senkrecht zur Steuernockenschwenkachse bevorzugt zwischen der Offenvorgabeposition und der Schließvorgabeposition um einen vorgegebener Schwenkwinkel schwenkbar ist, wobei der vorgegebene Schwenkwinkel bevorzugt in einem Bereich zwischen 40° und 55°, besonders bevorzugt zwischen 44° und 50°, liegt und ganz besonders bevorzugt im Wesentlichen 45°, 46°, 47° oder 48° entspricht.

Gemäß einer weiteren bevorzugten Ausführungsform umfasst die Klammervorrichtung eine Vorspanneinrichtung, die ausgebildet ist, den Steuernocken in zumindest eine vorgegebene Endposition, welche bevorzugt der Offenvorgabeposition und/oder der Schließvorgabeposition entspricht, vorzuspannen.

Vorzugsweise umfasst die Vorspanneinrichtung zumindest ein am Steuernocken angeordnetes Federelement und zumindest eine mit dem Federelement in Kontakt stehende Laufrolle, wobei das Federelement die Laufrolle bevorzugt in die zumindest eine Endposition vorspannt.

Gemäß einer weiteren bevorzugten Ausführungsform weist das Federelement in Bezug auf die Steuernockenschwenkachse eine Krümmung auf, die größer ist als eine Krümmung eines konzentrisch zur Steuernockenschwenkachse auf Höhe des Federelements vorliegenden geometrischen Teilkreises.

Alternativ kann der Steuernocken einen sich zu einem konzentrisch zur Steuernockenschwenkachse vorliegenden geometrischen Teilkreis nach radial außen erstreckenden Steg aufweisen, von welchem sich bezogen auf die Steuernockenschwenkachse tangential zur radialen Richtung ein Federelement, bevorzugt beidseitig des Stegs jeweils ein Federelement, erstreckt. Bei einem derartigen Aufbau kann die durch das Federelement auf die Laufrolle bereitgestellte Vorspannung in der zumindest einen Endposition maximal sein.

Gemäß einer weiteren bevorzugten Ausführungsform ist zumindest ein Federelement als gekrümmte Blattfeder, in Form eines bezogen auf die Steuernockenschwenkachse radial federnd gelagerten Bolzens oder in Form eines Biegebalkens mit freiem Ende ausgebildet.

Gemäß einer weiteren bevorzugten Ausführungsform ist die Laufrolle exzentrisch zu einer Lagermittelachse eines an einer Trägerplatte drehfest angebrachten Lagerbolzens am Lagerbolzen gelagert, wobei bevorzugt die Orientierung des Lagerbolzens um dessen Lagermittelachse veränderbar ist. So kann eine zwischen Lagerrolle und Federelement vorliegende Vorspannung in ihrer Höhe eingestellt werden. Durch ein Anstellen der Lagerrolle in Richtung Steuernockenschwenkachse kann die Vorspannkraft erhöht und in die andere Richtung entsprechend verringert werden.

Zusätzlich oder alternativ kann die Lagerrolle bezogen auf die Steuernockenschwenkachse in radialer Richtung auf den Steuernocken vorgespannt sein. Beispielsweise kann die Lagerrolle in Richtung des Steuernockens federn gelagert sein, beispielsweise über eine Torsionsfeder.

Gemäß einer weiteren bevorzugten Ausführungsform ist die Vorspanneinrichtung als magnetische Vorspanneinrichtung ausgebildet, wobei bevorzugt ein an einer Trägerplatte angeordneter Anschlag einen Magneten oder ein magnetisierbares und/oder ferromagnetisches Material aufweist, welcher beziehungsweise welches mit zumindest einem am Steuernocken, bevorzugt an einem sich bezogen auf die Steuernockenschwenkachse am Steuernocken nach radial außen erstreckenden Arm, vorgesehenen Magnetelement oder magnetisierbaren und/oder ferromagnetischen Material derart wechselwirkt, dass aufgrund einer magnetischen Anziehungskraft zwischen den vorgenannten der Steuernocken in zumindest einer Endposition gehalten ist.

Gemäß einer weiteren bevorzugten Ausführungsform weist der Steuerbolzen in Richtung der Steuernockenschwenkachse gesehen an einem stirnseitigen Ende einen Sicherungssteg zum Halten des Steuernockens an zumindest einem Klammerarm auf, wobei der Sicherungssteg bevorzugt in Form eines bevorzugt konzentrisch zur Längsmittelachse des Steuerbolzens angeordneten, bevorzugt kreisförmigen Flansches, ausgebildet ist, dessen Erstreckung senkrecht zur Steuernockenschwenkachse, bevorzugt dessen Außendurchmesser, größer ist als eine Breite der dem Steuernocken zugeordneten Langlochnut quer zu deren Längserstreckung, und/oder welcher in Form eines Verbindungssteges zwischen zwei Steuernocken ausgebildet ist.

Zwischen einer Trägerplatte der Klammervorrichtung, an welcher die Klammerarme und/oder der Steuernocken gelagert sind, und den Klammerarmen kann eine Gleitplatte zum Bereitstellen einer Gleitlagerung zwischen Trägerplatte und Klammerarmen vorgesehen sein.

Alternativ oder zusätzlich kann an einer Seite der Klammerarme, mit welcher sie an Behältertransportvorrichtung einer Behälterbehandlungsvorrichtung anbringbar sind, bevorzugt eine Oberseite der Klammerarme, eine Gleitplatte vorgesehen sein, welche eine Gleitlagerung der Klammerarme gegenüber der Behältertransportvorrichtung, an welchem die Klammervorrichtung anbringbar ist, bereitstellen soll.

Die Klammerarme und/oder die Trägerplatte können aus einem Metall, bevorzugt einer Stahllegierung ausgebildet sein. Vorzugsweise ist die Gleitplatte aus einem von der Trägerplatte und/oder den Klammerarmen unterschiedlichen Material ausgebildet oder mit einem derartigen Material beschichtet, beispielsweise einem Kunststoff, einer Kupferlegierung oder Messinglegierung.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Klammervorrichtung zum Halten eines Getränkebehälters in einem Halsabschnitt;
- Figur 2: schematisch eine Draufsicht einer Klammervorrichtung gemäß einer weiteren Ausführungsform in einer geschlossenen Stellung;
- Figur 3: schematisch eine Draufsicht der Klammervorrichtung aus Figur 2 in einer geöffneten Stellung;
- Figur 4: schematisch eine Draufsicht einer Klammervorrichtung gemäß einer weiteren Ausführungsform einer geschlossenen Stellung;
- Figur 5: schematisch eine Draufsicht der Klammervorrichtung aus Figur 4 in einer geöffneten Stellung;
- Figur 6: schematisch perspektivische Seitenansicht einer Klammervorrichtung gemäß einer weiteren Ausführungsform;
- Figur 7: schematisch eine Ansicht von unten der Klammervorrichtung aus Figur 1;
- Figur 8: schematisch eine perspektivische Seitenansicht von unten eines Teilbereiches der Klammervorrichtung aus Figur 1;
- Figur 9: schematisch eine Ansicht von unten einer Klammervorrichtung gemäß einer weiteren Ausführungsform;
- Figur 10: schematisch eine Ansicht von unten einer Klammervorrichtung gemäß einer weiteren Ausführungsform;
- Figur 11: schematisch eine perspektivische Seitenansicht einer Klammervorrichtung gemäß einer weiteren Ausführungsform;
- Figur 12: schematisch eine perspektivische Seitenansicht einer Klammervorrichtung gemäß einer weiteren Ausführungsform;
- Figur 13: schematisch eine Draufsicht einer Klammervorrichtung gemäß einer weiteren Ausführungsform;
- Figur 14: schematisch eine Draufsicht auf einen oberen Teil eines Steuernockens analog zur Ausführungsform gemäß Figur 13;
- Figur 15: schematisch eine Seitenansicht des Teils aus Figur 14; und
- Figur 16: schematisch eine Klammervorrichtung gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

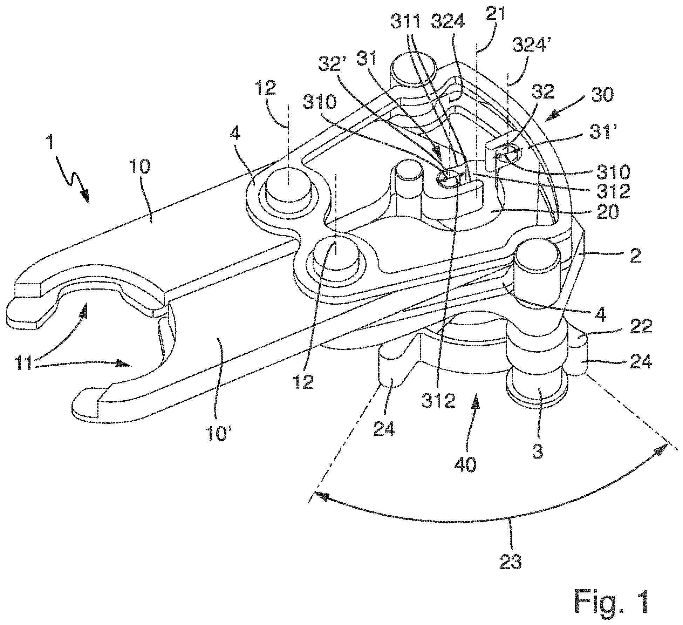

In Figur 1 ist schematisch eine perspektivische Seitenansicht einer Klammervorrichtung 1 zum Halten eines Getränkebehälters in einem Halsabschnitt gezeigt. Die Klammervorrichtung umfasst zwei Klammerarme 10, 10' mit einem Halteabschnitt 11 zum Halten des zu haltenden Behälters. Der Halteabschnitt 11 ist beispielsweise dazu ausgebildet, einen zu haltenden Behälter unterhalb eines Halsrings des Behälters zu greifen. Die Klammerarme 10, 10' sind zum Öffnen und Schließen jeweils um eine Schwenkachse 12 an einer Trägerplatte 2 schwenkbar angeordnet. Die Schwenkachsen 12 sind parallel zueinander orientiert.

Die Klammervorrichtung 1 umfasst ferner einen um eine parallel zu den Schwenkachsen 12 orientierte Steuernockenschwenkachse 21 schwenkbaren Steuernocken 20. Zum Vorgeben der Position der Halteabschnitte 11 der Klammerarme 10, 10' sind die Klammerarme 10, 10' und der Steuernocken 20 über einen Koppelmechanismus 30 gekoppelt. Entsprechend bewirkt ein Schwenken des Steuernockens 20 um seine Steuernockenschwenkachse 21 ein Schwenken der Klammerarme 10 um deren Schwenkachsen 12, sodass die Halteabschnitte 11 relativ zueinander aufeinander zu oder voneinander weg bewegt werden können, um die Klammervorrichtung 1 zu öffnen und zu schließen. Anders ausgedrückt wird die Bewegung der Halteabschnitte 11 relativ zueinander über den Steuernocken 20 gesteuert.

Der Koppelmechanismus 30 umfasst vorliegend zwei jeweils aus einer Langlochnut 31, 31' und einem in der Langlochnut 31; 31' geführten Steuerbolzen 32, 32' ausgebildete Paare, wobei jeweils ein Paar aus Langlochnut 31, 31' und Steuerbolzen 32, 32' jeweils einen Klammerarm 10, 10' mit dem Steuernocken 20 koppelt.

Vorliegend ist diese Kopplung dadurch bereitgestellt, dass jeweils ein Klammerarm 10, 10' eine Langlochnut 31, 31' aufweist, in welcher der dieser Langlochnut 31, 31' zugeordnete, am Steuernocken 20 angeordnete Steuerbolzen 32, 32' geführt ist.

Die "Führung" des Steuerbolzens 32, 32' in der zugeordneten Langlochnut 31, 31' ist dabei derart ausgebildet, dass der Steuerbolzen 32, 32' sich in einer parallel zur Steuernockenschwenkachse 21 erstreckenden Ebene relativ zur Langlochnut 31, 31' in dieser translatorisch bewegen kann und an den Seitenwänden der Langlochnut 31, 31' abrollen und/oder entlang gleiten kann, mithin sich relativ zur Langlochnut 31, 31' rotatorisch bewegen kann.

Die Langlochnuten 31, 31' erstrecken sich jeweils in Richtung der Steuernockenschwenkachse 21 komplett durch den Klammerarm 10, 10' hindurch. Sie können also als Durchgangsbohrungen mit Langloch-Form verstanden werden.

In Richtung der Steuernockenschwenkachse 21 gesehen weisen die Langlochnuten 31, 31' jeweils im Wesentlichen die Form eines Langlochs auf. Entsprechend erstreckten sie sich in einer Längserstreckung 310 von einem ersten Ende 312 zu einem zweiten Ende 312 mit zwischen den beiden Enden 312 im Wesentlichen parallel zueinander verlaufenden Seitenwänden 311.

Vorliegend sind die Langlochnuten 31, 31'jeweils einseitig offen ausgebildet. Mit anderen Worten ist eines der beiden Enden 312 als offenes Ende ausgebildet. Vorliegend ist das offene Ende 312 jeder Langlochnut 31, 31' jeweils das der Steuernockenschwenkachse 21 näher gelegene Ende 312.

Um die Position des Steuernockens 20 in einem an einer Behältertransportvorrichtung einer Behälterbehandlungsvorrichtung eingebauten Zustand verändern zu können, weist dieser einen sich in Bezug auf die Steuernockenschwenkachse 21 nach radial außen erstreckenden Interaktionsteil 22, an welchen beispielsweise ein an einer festen Position der Behälterbehandlungsvorrichtung vorgesehener Interaktionsbolzen anschlagen und so ein Schwenken des Steuernockens 20 bewirken kann.

Um den Bewegungsumfang des Steuernockens 20 um die Steuernockenschwenkachse 21 zu begrenzen, umfasst die Klammervorrichtung 1 ferner einen an der Trägerplatte 2 angeordneten optionalen Anschlag 3, welcher in Bezug auf die Steuernockenschwenkachse 21 in Umfangsrichtung gesehen zwischen zwei sich nach radial nach außen erstreckenden Armen 24 des Steuernockens 20 angeordnet ist. So kann der Steuernocken 20 nur in einem durch die Arme 24 begrenzten Winkel 23, welcher vorliegend 45° ist, um die Steuernockenschwenkachse 21 schwenken. Die Endpositionen des Steuernockens, bei welchen der Steuernocken 21 mit einem seiner Arme 24 am Anschlag 3 anliegt, stellen hierbei Vorgabepositionen hinsichtlich der Öffnungs- und Schließpositionen der Halteabschnitte 11 dar. Eine Endposition stellt entsprechend eine Offenvorgabeposition dar und die andere Endposition stellt eine Schließvorgabeposition dar.

Die Halteabschnitte 11 können entsprechend durch das Schwenken des Steuernockens 20 zwischen einer durch die Schließvorgabeposition vorgegebenen Schließposition, wie in Figur 1 gezeigt, und einer durch die Offenvorgabeposition vorgegebenen Öffnungsposition bewegt werden.

Die Klammervorrichtung 1 umfasst ferner eine Halteeinrichtung zum Halten des Steuernockens 21 in einer Vorgabeposition, mithin in der Schließvorgabeposition oder der Offenvorgabeposition, wie später noch näher erläutert.

Die Arme 24 und die Steuerbolzen 32, 32' sind derart ausgebildet, dass ein Hebelarmverhältnis zwischen einem sich zwischen Steuernockenschwenkachse 21 und einem vorgegebenen Angriffspunkt für ein Interaktionselement der Behälterbehandlungsvorrichtung zum Schalten des Steuernockens 20 vorliegenden Hebelarm und den zwischen Steuerbolzen 32, 32' und Steuernockenschwenkachse 21 vorliegenden Hebelarmen zwischen im Wesentlichen 5 zu 1 und 3 zu 1 liegt und bevorzugt im Wesentlichen 4 zu 1 ist. Unter "im Wesentlichen" ist hier zu verstehen, dass Unterschiede, welche sich aus den unterschiedlichen Abständen 320, 320' ergeben, innerhalb der Rundung beziehungsweise Toleranz des Hebelarmverhältnisses liegen. Mit anderen Worten ist der Unterschied der Abstände 320, 320' derart klein, dass die sich daraus ergebenen Unterschiede gegenüber den vorbeschriebenen Hebelarmen vernachlässigt werden können.

Zwischen der Trägerplatte 2 und den Klammerarmen 10 ist eine Gleitplatte 4 vorgesehen, welche eine Gleitlagerung der Klammerarme 10 gegenüber der Trägerplatte 2 bereitstellt.

Ferner ist auch oberhalb der Klammerarme 10 eine Gleitplatte 4 vorgesehen, welche eine Gleitlagerung der Klammerarme 10 gegenüber einer Behältertransportvorrichtung, an welcher die Klammervorrichtung 1 anbringbar ist, bereitstellen soll.

Die Klammerarme 10 und/oder die Trägerplatte 2 können aus einem Metall, bevorzugt einer Stahllegierung ausgebildet sein. Vorzugsweise sind die Gleitplatten 4 aus einem von der Trägerplatte 2 und/oder den Klammerarmen 10 unterschiedlichen Material ausgebildet, beispielsweise einem Kunststoff, einer Kupferlegierung oder Messinglegierung.

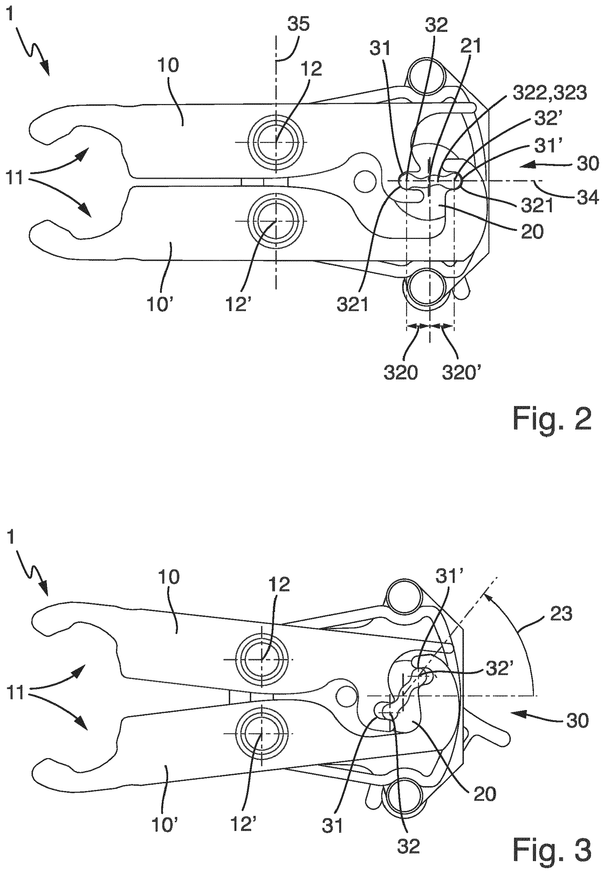

Figur 2 zeigt schematisch eine Draufsicht auf eine Klammervorrichtung 1 in einer weiteren Ausführungsform. Die in Figur 2 gezeigt Klammervorrichtung 1 entspricht dennoch im Wesentlichen jener aus Figur 1.

Den Ausführungsformen aus Figur 1 und Figur 2 ist insbesondere gemein, dass die Klammerarme 10, 10' nicht symmetrisch ausgebildet sind, und zwar hinsichtlich des Bereichs um die Langlochnuten 31, 31'. Dadurch kann ein besonders kompakter Aufbau der Klammervorrichtung 1 erzielt werden. In dieser Hinsicht weist die am Klammerarm 10 angeordnete Langlochnut 31 einen ersten Abstand zur Schwenkachse 12 des Klammerarms 10 auf und die am Klammerarm 10' angeordnete Langlochnut 31' einen zweiten Abstand zur Schwenkachse 12' des Klammerarms 10' auf, wobei der Betrag des zweiten Abstands größer ist als der Betrag des ersten Abstands. Die Abstände entsprechen der Länge der Hebelarme.

Damit die beiden Klammerarme 10, 10' bei einem Schwenken des Steuernockens 20 jeweils mit dem gleichen Winkel um ihre jeweilige Schwenkachse 12, 12' schwenken, anders ausgedrückt symmetrisch zueinander schwenken, ist der in der Langlochnut 10 geführte Steuerbolzen 32 mit einem ersten Abstand 320 zur Steuernockenschwenkachse 21 am Steuernocken 20 angeordnet, der kleiner ist als der Abstand des in der Langlochnut 31' geführten zweiten Steuerbolzens 32' zur Steuernockenschwenkachse 21. Die vorstehenden Abstände sind dabei so gewählt, dass das durch das Paar aus Langlochnut 31 und Steuerbolzen 32 bereitgestellte Übersetzungsverhältnis im Wesentlichen dem durch das Paar aus Langlochnut 31' und Steuerbolzen 32' bereitgestellten Übersetzungsverhältnis entspricht.

In der jeweils in den Figuren 1 und 2 gezeigten Schließposition der Halteabschnitte 11 liegt der Steuernocken 20 in der Schließvorgabeposition vor. Dabei sind die Steuerbolzen 32, 32' derart am Steuernocken 20 angeordnet, dass sie in der Schließvorgabeposition des Steuernockens 20 in Richtung der Steuernockenschwenkachse 21 betrachtet auf einer Linie liegen, die senkrecht zu einer durch die beiden Schwenkachsen 12, 12' ausgebildeten Ebene 35 orientiert ist.

Im Unterschied zur Ausführung gemäß Figur 1 sind die Steuerbolzen 32' in der Ausführung gemäß Figur 2 durch eine Verbindungswand 324 verbunden, welche als zwei miteinander verbundene Nockenabschnitte 322 verstanden werden kann. Hierdurch kann zum einen zusätzlich oder alternativ zum optimalen Anschlag 3 (siehe Figur 1) eine Begrenzung der Bewegung des Steuernockens 20 um die Steuernockenschwenkachse 21 bereitgestellt werden. Da die Steuerbolzen 32, 32' über die Verbindungswand 324 verbunden sind, weisen sie bezogen auf die Steuernockenschwenkachse 21 in radialer Richtung gegenüber der Ausführung in Figur 1 eine erhöhte Biegesteifigkeit auf.

Figur 3 zeigt schematisch eine Draufsicht der Klammervorrichtung 1 aus Figur 2 in einer geöffneten Stellung, in welcher die Halteabschnitte 11 in ihrer Öffnungsposition vorliegen. Entsprechend liegt der Steuernocken 20 um den vorgegebenen Winkel 23 von vorliegend 45° geschwenkt zu seiner Orientierung in Figur 2 vor. Über die mittels des vorbeschriebenen Koppelmechanismus 30 bereitgestellte Koppelung des Steuernockens 20 mit den Klammerarmen 10, 10', welche auch als Zwangsführung der Koppelarme 10, 10' durch den Steuernocken 20 verstanden werden kann, sind entsprechend auch die Koppelarme 10, 10' jeweils um ihre Schwenkachse 12, 12' geschwenkt.

Die Steuerbolzen 32, 32' bewegen sich bei einem Schwenken des Steuernockens 20 zwischen der Offenvorgabeposition und der Schließvorgabeposition entlang der ihnen zugeordneten Langlochnuten 31, 31'. Relativ zu den Langlochnut in 31, 31' gesehen umfasst diese Bewegung der Steuerbolzen 32, 32' eine translatorische Bewegungskomponente entlang der Längserstreckung 310 der Langlochnut in 31, 31' und eine rotatorische Bewegungskomponente, mithin eine Gleitbewegung relativ zu den Seitenwänden 311 der Langlochnuten 31, 31'.

Um die letztgenannte rotatorische Bewegungskomponente zu ermöglichen, umfassen die Steuerbolzen 32, 32' bezogen auf ihre jeweilige Längsmittelachse 325 einen gekrümmten Abschnitt, vorliegend in Form eines kreisbogenförmigen Abschnitts 321. Wogegen bei der Ausführungsform gemäß Figur 1 der kreisbogenförmige Abschnitt 321 über den gesamten Umfang der zylindrisch ausgebildeten Steuerbolzen 32, 32' verläuft, ist der kreisbogenförmige Abschnitt 321 bei der Ausführung gemäß der Figuren 2 und 3 jeweils durch die Verbindungswand 324 begrenzt.

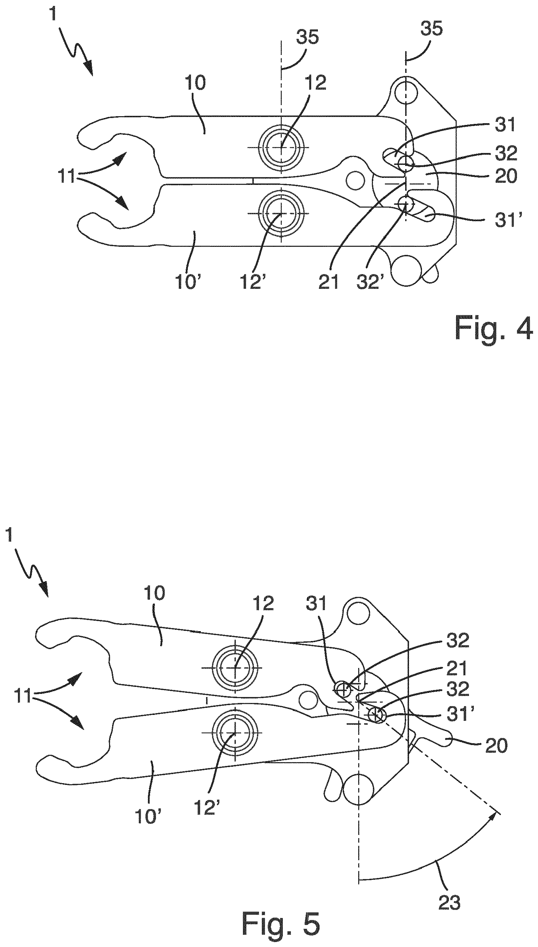

Aus den Figuren 4 und 5 ist jeweils schematisch eine Draufsicht einer Klammervorrichtung 1 gemäß einer weiteren Ausführungsform in einer geschlossenen Stellung (Figur 4) und einer geöffneten Stellung (Figur 5) gezeigt. Die Klammervorrichtung 1 entspricht im Wesentlichen der Klammervorrichtung 1 aus Figur 1.

Im Unterschied zur den Klammervorrichtungen 1 aus Figur 1 und den Figuren 2 und 3 weist die Klammervorrichtung 1 gemäß der Figuren 4 und 5 einen derartigen Aufbau auf, dass die Steuerbolzen 32, 32' in der geschlossenen Stellung der Klammervorrichtung 1, mithin wenn die Halteabschnitte 11 in ihrer Schließposition und demgemäß der Steuernocken 20 in der Schließvorgabeposition vorliegen, senkrecht zur Steuernockenschwenkachse 21 betrachtet auf einer Linie 34 liegen, die im Wesentlichen parallel zu der durch die Schwenkachsen 12, 12' ausgebildeten Ebene 35 liegt. Bei dieser Ausführung kann besonders effektiv verhindert werden, dass durch einen Druck gegen die Halteabschnitte 11, beispielsweise aufgrund eines plötzlichen Stoßes auf einen in der Klammervorrichtung 1 gehaltenen Behälter, die Halteabschnitte 11 durch Schwenken der Klammerarme 10, 10' um ihre Schwenkachsen 12, 12' öffnen.

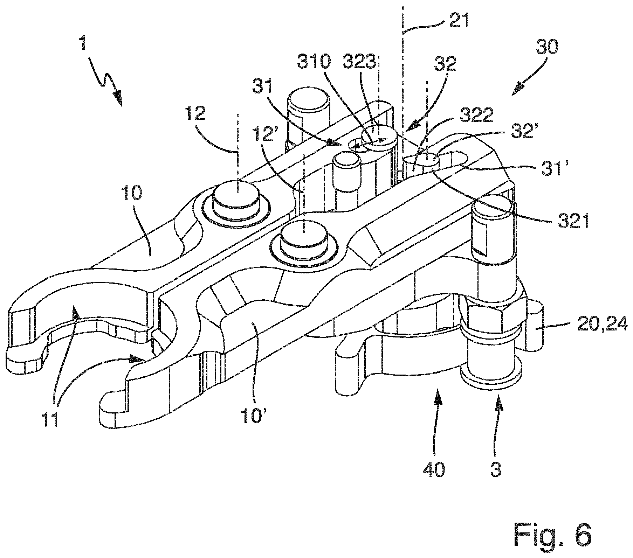

Figur 6 ist schematisch eine perspektivische Seitenansicht einer Klammervorrichtung 1 gemäß einer weiteren Ausführungsform zu entnehmen, welche im Wesentlichen jener aus Figur 1 entspricht.

Bei der Klammervorrichtung 1 gemäß Figur 6 weist im Unterschied zur Ausführung gemäß Figur 1 der Steuerbolzen 32', einen Nockenabschnitt 322 auf.

Der Steuerbolzen 32 weist in Richtung der Steuernockenschwenkachse 21 gesehen an seinem stirnseitigen Ende einen Sicherungssteg 323 auf, vorliegend ausgebildet in Form eines konzentrisch zur Längsmittelachse 325 des Steuerbolzens 32 angeordneten kreisförmigen Flansches, dessen Außendurchmesser größer ist als die Breite der Langlochnut 31 quer zu deren Längserstreckung 310. Dadurch ist in Richtung der Steuernockenschwenkachse 21 ein Formschluss zwischen dem Klammerarm 10 und dem Steuernocken 20 bereitgestellt, sodass der Steuernocken 20 in der in Figur 6 gezeigten, nicht an eine Behältertransportvorrichtung angebrachten Zustand an dem Klammerarm 10 gehalten ist.

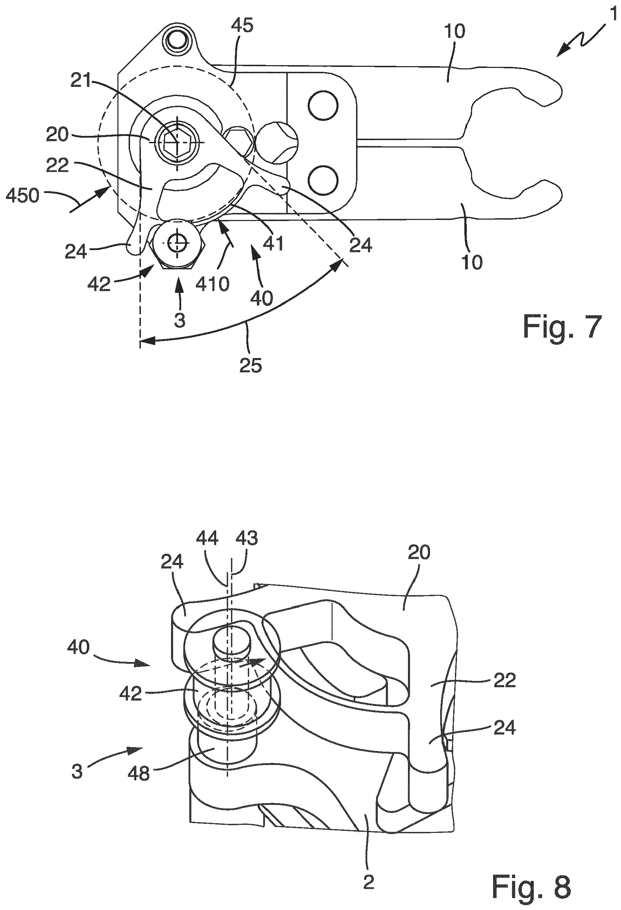

In Hinblick auf die Figuren 7 und 8 wird auf die den Klammervorrichtungen 1 gemäß der Figuren 1 bis 6 gemeinsame Vorspanneinrichtung 40 näher eingegangen.

Dabei zeigen Figur 7 schematisch eine Ansicht von unten der Klammervorrichtung 1 aus Figur 1 und Figur 8 schematisch eine perspektivische Seitenansicht von unten eines Teilbereiches der Klammervorrichtung 1 aus Figur 1.

Die Vorspanneinrichtung 40 ist ausgebildet, den Steuernocken 20 in einer vorgegebenen Endposition, mithin der Offenvorgabeposition oder der Schließvorgabeposition, zu halten beziehungsweise in diese vorzuspannen.

In der Ausführungsform, wie sie den Klammervorrichtungen 1 gemäß der Figuren 1 bis 8 gemein ist, umfasst die Vorspanneinrichtung 40 ein am Steuernocken 20 angeordnetes Federelement 41, welches vorliegend in Form einer gekrümmten Blattfeder bereitgestellt ist und sich zwischen den Armen 24 bezogen auf die Steuernockenschwenkachse im Wesentlichen in Umfangsrichtung erstreckt. Wie aus Figur 7 ersichtlich, weist das Federelement 41 auf dessen Richtung Laufrolle 42 weisenden Seite eine durch den Krümmungsradius 410 angedeutete Krümmung auf, die größer ist als eine mittels des Radius 450 angedeutete Krümmung eines konzentrisch zur Steuernockenschwenkachse 21 vorliegenden geometrischen Teilkreises 45 auf Höhe der Anbindungspunkte des Federelements 41 an die Arme 24 des Interaktionsteils 22.

Wie insbesondere aus Figur 8 zu entnehmen, ist der Anschlag 3 ausgebildet durch eine über einen Lagerbolzen 48 an der Trägerplatte 2 drehbar gelagerte Laufrolle 42, die mit dem Federelement 41 in Kontakt ist beziehungsweise über dieses abrollt, begrenzt durch die die Endpositionen bereitstellenden Arme 24.

Da sich das Federelement 41 gegenüber dem Teilkreisdurchmesser 45 bezogen auf die Steuernockenschwenkachse 21 aufgrund des kleineren Krümmungsradius 410 im Vergleich zum Radius 450 nach radial außen wölbt, übt das Federelement 41 eine Federkraft auf die Laufrolle 42 aus, welche in der Mitte des Federelementes 41 am größten ist, und dadurch die Laufrolle 42 in die jeweilige Endposition vorspannt. Durch diese Vorspannung liegen der Steuernocken 20 und entsprechend die Klammerarme 10 in einem stabilen Zustand vor, nämlich entweder in der Öffnungsposition oder der Schließposition.

Um die Klammerarme 10 aus der jeweiligen Position zu bewegen, muss der Steuernocken 20 gegen die via des Federelementes 41 bereitgestellte Spannung bewegt werden. Mit anderen Worten muss die bei einem Rollen der Laufrolle 42 über das Federelement 41 durch die daraus resultierende elastische Biegung erzeugte Federkraft des Federelementes 41 entstehende Kraft überwunden werden, um eine Relativbewegung von Laufrolle 42 und Steuernocken 20 zu ermöglichen. Ist der Scheitel, mithin die Mitte des Federelementes 41 überwunden, so unterstützt die durch das Federelement 41 aufgrund dessen Biegung bereitgestellte Federkraft die Bewegung des Steuernockens 20 in die jeweilige Endposition.

Mittels des Bezugszeichens 25 ist der Erstreckungswinkel des Interaktionsabschnitts 22 beziehungsweise der Arme 24 in Umfangsrichtung bezogen auf die Steuernockenschwenkachse 21 angedeutet, welcher vorliegend 45° beträgt.

Wie aus Figur 8 zu entnehmen, ist die Laufrolle 42 exzentrisch zu einem an der Trägerplatte 2 drehfest angebrachten Lagerbolzen 48 am Lagerbolzen 48 gelagert. Entsprechend weist die Drehachse 43 der Laufrolle 42 einen vorgegebenen Abstand zur Lagermittelachse 44 des Lagerbolzen 48 auf.

Durch ein Verdrehen der Orientierung des Lagerbolzen 48 um dessen Lagermittelachse 44 kann so eine durch das Federelement 41 bereitgestellte Vorspannkraft verändert werden. Entsprechend lässt sich so auch eine Haltekraft der Klammerarme in der jeweiligen Endposition, hier der geschlossenen Stellung, mithin wenn der Steuernocken 20 sich in der Schließvorgabeposition befindet, einstellen.

In einer alternativen Ausführungsform kann der Lagerbolzen 48 bezogen auf die Lagermittelachse 44 in Umfangsrichtung vorgespannt sein, derart, dass die Lagerrolle 42 bezogen auf die Steuernockenschwenkachse 21 in radialer Richtung auf den Steuernocken 20 zu gedrückt wird, bevorzugt, indem eine hier nicht gezeigte Torsionsfeder zwischen Trägerplatte 2 und Lagerbolzen 48 vorgesehen ist.

Wenn bei dieser Ausführungsform zusätzlich das Federelement 41 vorgesehen ist, setzt sich die Vorspannkraft, welche den Steuernocken 20 in einer der Endpositionen hält, aus der Federkraft auf Seiten der Lagerrolle 42 und der Federkraft auf Seiten des Federelementes 41 zusammen.

Alternativ kann bei einer derartigen federnden Lagerung der exzentrisch zur Lagermittelachse 44 drehgelagerten Laufrolle 42 anstelle des elastischen Federelementes 41 ein starres Element, welches analog zum Federelement 41 eine Krümmung aufweist, die größer ist als die des Teilkreises 45 vorgesehen sein. Dann wird die Vorspannkraft zum Halten des Steuernockens 20 in eine der Endpositionen allein durch das Federelement (nicht gezeigt) auf Seiten der Laufrolle 42 bereitgestellt.

Die Form der Arme 24 und die Lage der Laufrolle 42 sind derart vorgegeben, dass ein Hebelarmverhältnis zwischen einem sich zwischen der Steuernockenschwenkachse 21 und dem Kontaktbereich der Laufrolle 42 an den Armen 24 vorliegenden Hebelarm und den zwischen Steuerbolzen 32. 32' und der Steuernockenschwenkachse 21 jeweils vorliegenden Hebelarmen zwischen im Wesentlichen 6 zu 1 und 2 zu 1 liegt und bevorzugt im Wesentlichen 5 zu 1, 4 zu 1 oder 3 zu 1 ist. Unter "im Wesentlichen" ist hier zu verstehen, dass Unterschiede, welche sich aus den unterschiedlichen Abständen 320, 320' ergeben, innerhalb der Rundung beziehungsweise Toleranz des Hebelarmverhältnisses liegen. Mit anderen Worten ist der Unterschied der Abstände 320, 320' derart klein, dass die sich daraus ergebenen Unterschiede gegenüber den vorgeschriebenen Hebelarmen vernachlässigt werden können.

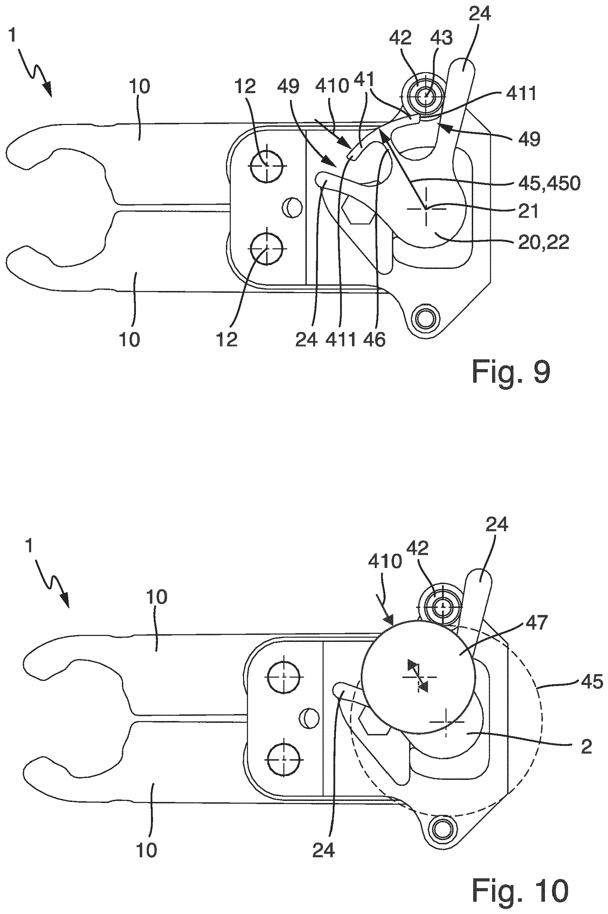

Aus Figur 9 ist schematisch eine Ansicht von unten einer Klammervorrichtung 1 gemäß einer weiteren Ausführungsform zu entnehmen. Die Klammervorrichtung 1 entspricht im Wesentlichen jener aus Figur 8, mit Ausnahme der Ausgestaltung der Vorspanneinrichtung 40. Anstelle der durchgehenden Blattfeder, welche an beiden Enden mit den Armen 24 befestigt ist beziehungsweise in diese übergeht, weist der Steuernocken 20 gemäß dieser Ausführungsform einen sich im Wesentlichen mittig zwischen den Armen 24 bis zum Teilkreis 45 nach radial außen erstreckenden Steg 46 auf, an dessen radial außen gelegenen Ende sich in Wesentlichen in Umfangsrichtung beziehungsweise tangential dazu bezogen auf die Steuernockenschwenkachse 21 beidseitig jeweils ein Federelement 41 in Form eines Biegebalkens mit freiem Ende erstreckt, wobei das freie Ende jeweils mit einem vorgegebenen Abstand zu dem jeweiligen Arm 24 endet.

Die Federelemente 41 weisen eine Krümmung auf, die kleiner ist als die Krümmung des Teilkreises 45. Mit anderen Worten ist der Krümmungsradius 410 der Federelemente 41 bezogen auf die Steuernockenschwenkachse 21 größer als der Radius 450 des Teilkreises 45, auf dessen Höhe der Steg 46 endet.

Entsprechend liegen die freien Enden 411 in Bezug auf die Steuernockenschwenkachse 21 radial weiter außen als der Teilkreis 45. Die Laufrolle ist 42 vorliegend derart gelagert, dass sie, fehlte theoretisch betrachtet der Steg 46, auf dem Teilkreis 45 abrollen würde.

Dadurch, dass beidseitig des Steges 46 jeweils zwischen dem dortigen freien Ende 411 und dem jeweiligen Arm 24 ein Abstand vorliegt, ist dadurch eine Aufnahme 49 zum in Umfangsrichtung bezogen auf die Steuernockenschwenkachse 21 betrachtet formschlüssigen Aufnehmen der Laufrolle 42 in der jeweiligen Endposition ausgebildet.

Die Federelemente 41 sind dabei derart ausgebildet, dass diese durch die in der Aufnahme 49 befindliche Laufrolle 42 um einen vorgegebenen Betrag elastisch gebogen vorliegen. Dadurch stellen sie eine Vorspannkraft auf die Laufrolle 42 bereit, welche die Laufrolle 42 in die jeweilige Endposition vorgespannt.

Um die Laufrolle 42 aus der jeweiligen Endposition zu bewegen, muss der Steuernocken 20 entgegen der durch das Federelement 41 bereitgestellten Vorspannung geschwenkt werden. Diese Ausführungsform stellt ein besonders sicheres Halten der Laufrolle 42 beziehungsweise des Steuernockens 20 in einer der Endpositionen bereit, da die via des Federelementes 41 auf die Laufrolle 42 bereitgestellte Vorspannkraft in den Endpositionen am größten ist.

Die Laufrolle 42 kann optional analog zur Ausführungsform aus Figur 8 exzentrisch zur Lagermittelachse 44 gelagert und/oder gegen den Steuernocken vorgespannt sein.

Aus Figur 10 ist schematisch eine Ansicht von unten einer Klammervorrichtung 1 gemäß einer weiteren Ausführungsform zu entnehmen. Die Klammervorrichtung 1 entspricht im Wesentlichen jener aus Figur 8, mit Ausnahme der Ausgestaltung der Vorspanneinrichtung 40. Anstelle des als durchgehende Blattfeder bereitgestellten Federelementes 41 ist bezogen auf die Steuernockenschwenkachse 21 radial beabstandet zu dieser ein Bolzen 47 in radialer Richtung federnd am Steuernocken 20 gelagert. Der Bolzen 47 weist analog zur Ausführungsform in Figur 8 eine Krümmung, angedeutet durch den Krümmungsradius 410, auf, die größer ist als die Krümmung des Teilkreises 45. Der Bolzen 47 ist aufgrund seiner federnden Lagerung gegen die Laufrolle 42 in radialer Richtung nach außen weisend vorgespannt. Entsprechend ist die Laufrolle 42 durch den Bolzen 47 in einer der Endpositionen gehalten.

Die Laufrolle 42 kann optional analog zur Ausführungsform aus Figur 8 exzentrisch zur Lagermittelachse 44 gelagert und/oder gegen den Steuernocken vorgespannt sein.

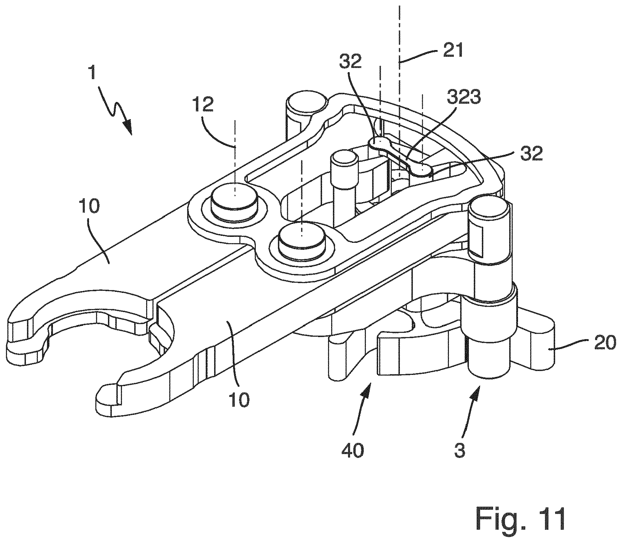

Figur 11 zeigt schematisch eine perspektivische Seitenansicht einer Klammervorrichtung 1 gemäß einer weiteren Ausführungsform, welche im Wesentlichen jener aus Figur 9 entspricht.

Bei dieser Ausführungsform sind die Steuerbolzen 32 analog zur Ausführung in Figur 1 als sich parallel zur Steuernockenschwenkachse 21 erstreckende Zylinderstifte ausgebildet. An ihren stirnseitigen Enden sind diese oberhalb der Klammerarme 10 über einen Sicherungssteg 323 verbunden, welcher sich zwischen den beiden Steuerbolzen 32 erstreckt.

Der Sicherungssteg 323 entspricht in seiner Funktonalität jenem wie in Hinblick auf Figur 6 beschrieben. Zusätzlich stellt er eine im Vergleich zur Ausführungsform aus Figur 1 erhöhte Biegesteifigkeit der Steuerbolzen 32 in radialer Richtung bezogen auf die Steuernockenschwenkachse 21 bereit.

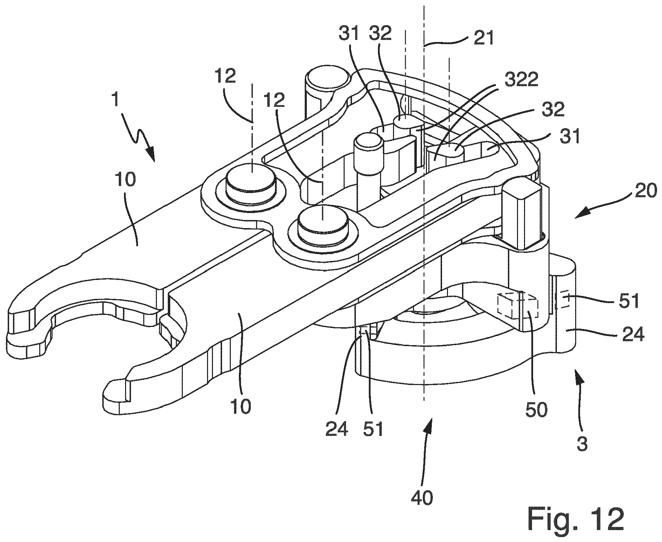

Figur 12 zeigt schematisch eine perspektivische Seitenansicht einer Klammervorrichtung 1 gemäß einer weiteren Ausführungsform, welche im Wesentlichen jener aus Figur 1 entspricht.

Die Steuerbolzen 32 gemäß dieser Ausführungsform weisen in Unterschied zur Ausführung gemäß Figur 1 jeweils einen Nockenabschnitt 322 wie bereits hinsichtlich des Steuerbolzens 32' aus Figur 6 beschrieben auf.

Ferner ist die Vorspanneinrichtung 40 als magnetische Vorspanneinrichtung 40 ausgebildet. Zu diesem Zwecke weist der Anschlag 3 einen Magneten 50 auf, welcher mit einem in jedem der Arme 24 vorgesehenen Magnetelement 51 derart wechselwirkt, dass zwischen dem Magneten 50 und dem jeweiligen Magnetelement 51 eine magnetische Anziehungskraft vorliegt, wenn der Steuernocken 20 in einer der Endpositionen vorliegt. Durch die magnetische Anziehungskraft wird der Steuernocken 20 in der jeweiligen Endposition gehalten. Um den Steuernocken 20 aus der jeweiligen Endposition zu bewegen, muss die magnetische Anziehungskraft überwunden werden.

Anstelle der Magnetelemente 51 können auch ferromagnetische Körper in den Armen 24 vorgesehen sein.

Ferner ist es möglich, den Magneten 50 durch ein ferromagnetisches Material zu ersetzen, sofern in den Armen 24 dann ein Magnetfeld erzeugende Magnetelemente 51 vorliegen.

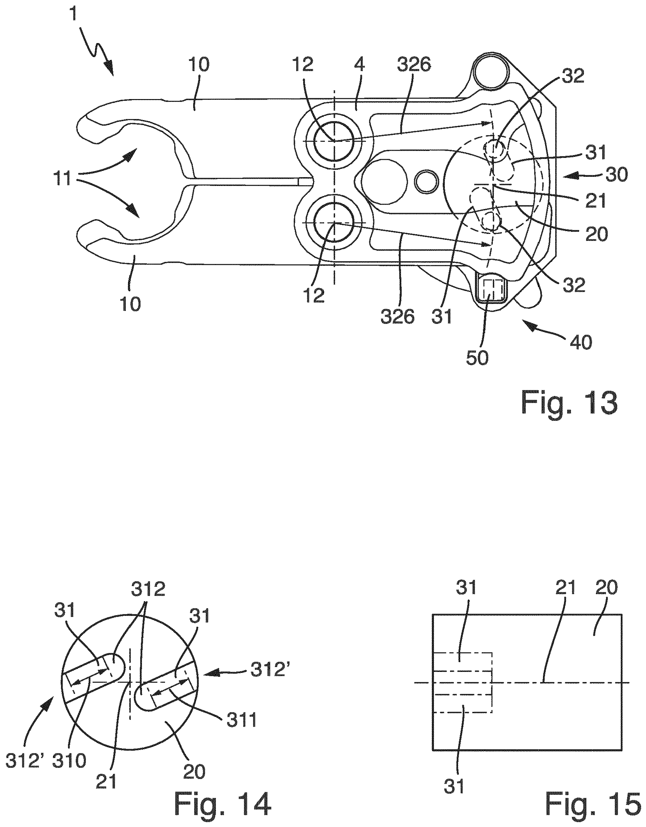

Figur 13 zeigt schematisch eine Draufsicht einer Klammervorrichtung 1 gemäß einer weiteren Ausführungsform, welche im Wesentlichen jener aus Figur 1 entspricht, wobei die Vorspanneinrichtung 40 eine magnetische Vorspanneinrichtung gemäß Figur 12 ist.

Der Koppelmechanismus 30 unterscheidet sich zudem darin, dass die Steuerbolzen 32 auf Seiten der Klammerarme 10 vorgesehen sind. Sie erstrecken sich von einer in Figur 13 als Unterseite der Klammerarme 10 zu betrachtenden Seite, welche eine Richtung Steuernocken 20 weisenden Seite der Klammerarme 10 darstellt, parallel zur Steuernockenschwenkachse 21 mit einer vorgegebenen Länge in Richtung des Steuernockens 20.

Jeder der Steuerbolzen 32 ist in einer an einer Richtung Klammerarmen 10 weisenden Stirnseite, in Figur 13 die Oberseite des Steuernockens 20, vorgesehenen sacklochartigen Langlochnut 31 geführt.

Die Steuerbolzen 32 sind jeweils an ihrem Klammerarm 10 mit einem Abstand beziehungsweise mit einem Radius 326 beabstandet von der Schwenkachse 12 des jeweiligen Klammerarms 10 angeordnet. Mit anderen Worten schwenken sie auf dem Radius 326 um die jeweilige Schwenkachse 12.

Die Figuren 14 und 15 zeigen schematisch eine Draufsicht und eine Seitenansicht auf einen oberen Teil eines Steuernockens 20 analog zur Ausführungsform gemäß Figur 13, wobei bei dieser Ausführungsform die Langlochnuten 31 einseitig offen ausgebildet sind. Mit anderen Worten sind die bezogen auf die Steuernockenschwenkachse 21 radial außen gelegenen Enden 312' als freie beziehungsweise offene Enden 312' ausgebildet. So kann beispielsweise Reinigungsfluid, welches bei einer Reinigung einer die Klammervorrichtung 1 aufweisenden Behälterbehandlungsvorrichtung in die Langlochnuten 31 eintritt, an den offenen Enden 312' wieder aus den Langlochnuten 31 abfließen.

Aus Figur 15 ist die Ausbildung der Langlochnuten 31 als Sackloch zu erkennen.

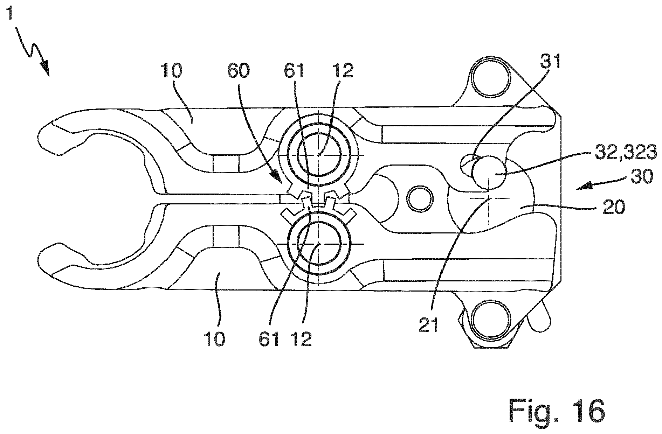

Figur 16 zeigt schematisch eine Klammervorrichtung 1 gemäß einer weiteren Ausführungsform. Die Klammervorrichtung 1 entspricht im Wesentlichen jener aus Figur 1, mit den folgenden Unterschieden:
Der Koppelmechanismus 30 umfasst genau ein Paar aus Langlochnut 31 und Steuerbolzen 32. Hierbei koppelt das Paar aus Langlochnut 31 und Steuerbolzen 32 einen der Klammerarme 10 direkt mit dem Steuernocken 20. Dieser Klammerarm 10 ist ferner mit dem anderen Klammerarm 10' über ein Getriebe 60 drehgekoppelt.

Mit anderen Worten umfasst der Koppelmechanismus 30 gemäß dieser Ausführungsform das genau eine Paar aus Langlochnut 31 und Steuerbolzen 32, um über eine Bewegung des Steuernockens 20 den ersten Klammerarm 10 zu bewegen, und ferner umfasst der Koppelmechanismus 30 ein Drehkopplungseinheit, vorliegend ausgebildet in Form des Getriebes 60 zum Koppeln des ersten Klammerarmes 10 mit dem zweiten Klammerarm 10', um so eine indirekte, über den Klammerarm 10 laufende Kopplung des zweiten Klammerarms 10' mit dem Steuerbolzen 20 bereitzustellen.

Beide Klammerarme 10, 10' weisen jeweils einen zahnradförmigen Verzahnungsabschnitt 61 auf, der im Wesentlichen konzentrisch zur Schenkachse 12 des jeweiligen Klammerarmes 10, 10' angeordnet ist und sich senkrecht zu dieser erstreckt. Die Verzahnungsabschnitte 61 stehen miteinander in Eingriff, so dass dadurch die Drehkopplung zwischen den Klammerarmen 10, 10' ausgebildet ist.

Der Steuerbolzen 32 umfasst ferner einen Sicherungssteg 323 analog zur Ausführungsform aus Figur 6.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Klammervorrichtung
- 2: Trägerplatte
- 3: Anschlag
- 4: Gleitplatte

- 10: Klammerarm
- 11: Halteabschnitt
- 12: Schwenkachse

- 20: Steuernocken
- 21: Steuernockenschwenkachse
- 22: Interaktionsteil
- 23: Winkel
- 24: Arm
- 25: Erstreckungswinkel

- 30: Koppelmechanismus
- 31: Langlochnut
- 310: Längserstreckung
- 311: Seitenwand
- 312: Ende
- 32: Steuerbolzen
- 320: Abstand
- 321: Kreisbogenförmiger Abschnitt
- 322: Nockenabschnitt
- 323: Sicherungssteg
- 324: Verbindungswand
- 325: Längsmittelachse
- 326: Radius
- 33: Getriebe
- 34: Linie
- 35: Ebene
- 40: Vorspanneinrichtung
- 41: Federelement
- 410: Krümmungsradius
- 411: Freies Ende
- 42: Laufrolle
- 43: Drehachse
- 44: Lagermittelachse
- 45: Teilkreis
- 450: Radius
- 46: Steg
- 47: Bolzen
- 48: Lagerbolzen
- 49: Aufnahme
- 50: Magnetelement
- 51: Magnet
- 60: Getriebe
- 61: Verzahnungsabschnitt

## Patentansprüche

1. Klammervorrichtung (1) zum Halten eines Behälters in einer Behälterbehandlungsvorrichtung, bevorzugt zum Halten eines Getränkebehälters an einem Halsabschnitt, umfassend zwei Klammerarme (10) mit einem Halteabschnitt (11) zum Halten des zu haltenden Behälters und einen um eine Steuernockenschwenkachse (21) schwenkbaren Steuernocken (20), wobei die Klammerarme (10) und der Steuernocken (20) über einen Koppelmechanismus (30) gekoppelt sind, so dass ein Schwenken des Steuernockens (20) um seine Steuernockenschwenkachse (21) ein Schwenken der Klammerarme (10) relativ zueinander bewirkt,
**dadurch gekennzeichnet, dass**
der Koppelmechanismus (30) zumindest ein Paar aus einer Langlochnut (31) und einem in der Langlochnut (31) geführten Steuerbolzen (32) zum Übertragen von Bewegungen des Steuernockens (20) auf die Klammerarme (10) umfasst.

2. Klammervorrichtung (1) gemäß Anspruch 1, **dadurch gekennzeichnet, dass** die Halteabschnitte (11) durch das Schwenken des Steuernockens (20) in eine Öffnungsposition und/oder in eine Schließposition bewegbar sind, und/oder dass die Klammerarme (10) in einer senkrecht zur Steuernockenschwenkachse (21) orientierten Ebene schwenkbar angeordnet sind und/oder die Klammerarme (10) um zumindest eine parallel zur Steuernockenschwenkachse (21) orientierte Schwenkachse (12) schenkbar sind, wobei bevorzugt jeder Klammerarm (10) jeweils eine Schwenkachse (12) aufweist, um welche er schwenkbar ausgebildet ist, und/oder dass die Halteabschnitte (11), bevorzugt bezogen auf die zumindest eine Schwenkachse (12), auf einer Seite der Klammerarme (10) angeordnet sind und das zumindest eine Paar aus Langlochnut (31) und Steuerbolzen (32) auf der anderen Seite angeordnet ist.

3. Klammervorrichtung (10) gemäß einem der vorstehenden Ansprüche, **dadurch gekennzeichnet, dass** die zumindest eine Langlochnut (31) auf Seiten der Klammerarme (10) angeordnet ist und der zumindest eine Steuerbolzen (32) am Steuernocken (20) angeordnet ist, oder dass der zumindest eine Steuerbolzen (32) auf Seiten der Klammerarme (10) angeordnet ist und die zumindest eine Langlochnut (31) am Steuernocken (20) angeordnet ist.

4. Klammervorrichtung (1) gemäß Anspruch 1 bis 3, **dadurch gekennzeichnet, dass** der Koppelmechanismus (30) zwei Paare aus Langlochnut (31) und Steuerbolzen (32) umfasst, wobei jeweils ein Paar aus Langlochnut (31) und Steuerbolzen (32) jeweils einen Klammerarm (10) mit dem Steuernocken (20) koppelt.

5. Klammervorrichtung (1) gemäß einem Ansprüche 1 bis 3, **dadurch gekennzeichnet, dass** der Koppelmechanismus (30) genau ein Paar aus Langlochnut (31) und Steuerbolzen (32) umfasst, wobei das Paar aus Langlochnut (31) und Steuerbolzen (32) einen der Klammerarme (10) mit dem Steuernocken (20) koppelt und dieser Klammerarm (10) mit dem anderen Klammerarm (10) drehgekoppelt ist, bevorzugt über ein Getriebe (60), besonders bevorzugt ein Verzahnungsgetriebe.

6. Klammervorrichtung (1) gemäß einem der vorstehenden Ansprüche, **dadurch gekennzeichnet, dass** zumindest ein Steuerbolzen (32) relativ zur Steuernockenschwenkachse (21) exzentrisch angeordnet ist.

7. Klammervorrichtung (1) gemäß einem der Ansprüche 1 bis 4 oder gemäß Anspruch 6 wenn rückbezogen auf Anspruch 4, **dadurch gekennzeichnet, dass** ein erstes Langloch (31) an einem ersten Klammerarm (10) angeordnet ist und einen ersten Abstand zur Schwenkachse (12) des ersten Klammerarms (10) aufweist und ein zweites Langloch (31') am zweiten Klammerarm (10') angeordnet ist und einen zweiten Abstand zur Schwenkachse (12') des zweiten Klammerarms (10') aufweist, wobei der Betrag des zweiten Abstands größer ist als der Betrag des ersten Abstands, und wobei ein in der ersten Langlochnut (31) geführter erster Steuerbolzen (32) mit einem ersten Abstand (320) zur Steuernockenschwenkachse (21) am Steuernocken (20) angeordnet ist und ein in der zweiten Langlochnut (31') geführter zweiter Steuerbolzen (32') mit einem zweiten Abstand (320') zur Steuernockenschwenkachse (21), dessen Betrag größer ist als jener des ersten Abstands (320), am Steuernocken (20) angeordnet ist.

8. Klammervorrichtung (1) gemäß einem der vorstehenden Ansprüche, **dadurch gekennzeichnet, dass** zumindest eine Langlochnut (31) zumindest teilweise als Durchgangsbohrung ausgebildet ist, zumindest eine Langlochnut (31) zumindest teilweise als Sacklochbohrung ausgebildet ist, zumindest eine Langlochnut (31) einseitig offen ausgebildet ist, und/oder zumindest eine Langlochnut (31) zweiseitig offen ausgebildet ist.

9. Klammervorrichtung (1) gemäß einem der vorstehenden Ansprüche, **dadurch gekennzeichnet, dass** der zumindest eine Steuerbolzen (32) einen bezogen auf eine Längsmittelachse (325) des Steuerbolzens (32) gekrümmten Abschnitt, bevorzugt einen kreisbogenförmigen Abschnitt (321), umfasst, und/oder zumindest ein Steuerbolzen (32) einen sich in einer senkrecht zur Steuernockenschwenkachse (21) orientierten Ebene erstreckenden Nockenabschnitt (322) aufweist.

10. Klammervorrichtung (1) gemäß einem der vorstehenden Ansprüche, **dadurch gekennzeichnet, dass** die Klammerarme (10), der Steuernocken (20) und der Koppelmechanismus (30) derart ausgebildet sind, dass durch ein Schwenken des Steuernockens (20) zwischen einer Offenvorgabeposition und einer Schließvorgabeposition die Halteabschnitte (11) durch Schwenken der Klammerarme (10) relativ zueinander zwischen einer Öffnungsposition und/oder einer Schließposition bewegbar sind, wobei der Steuernocken (20) bezogen auf eine Ebene senkrecht zur Steuernockenschwenkachse (21) zwischen der Offenvorgabeposition und der Schließvorgabeposition bevorzugt um einen vorgegebener Winkel (23) schwenkbar ist, wobei der vorgegebene Winkel (23) bevorzugt in einem Bereich zwischen 40° und 55°, besonders bevorzugt zwischen 44° und 50°, liegt und ganz besonders bevorzugt im Wesentlichen 45°, 46°, 47° oder 48° entspricht.

11. Klammervorrichtung (1) gemäß einem der vorstehenden Ansprüche, **dadurch gekennzeichnet, dass** die Klammervorrichtung (1) eine Vorspanneinrichtung (40) umfasst, die ausgebildet ist, den Steuernocken (20) in zumindest eine vorgegebene Endposition, welche bevorzugt der Offenvorgabeposition und/oder der Schließvorgabeposition entspricht, vorzuspannen, wobei bevorzugt die Vorspanneinrichtung (40) ein am Steuernocken (20) angeordnetes Federelement (41), und eine mit dem Federelement (41) in Kontakt stehende Laufrolle (42) aufweist, wobei das Federelement (41) die Laufrolle (42) bevorzugt in die zumindest eine Endposition vorspannt, wobei das zumindest eine Federelement (41) bevorzugt als gekrümmte Blattfeder, in Form eines bezogen auf die Steuernockenschwenkachse (21) radial federnd gelagerten Bolzens (47) oder in Form eines Biegebalkens mit freiem Ende (411) ausgebildet ist.

12. Klammervorrichtung (1) gemäß dem vorstehenden Anspruch, **dadurch gekennzeichnet, dass** das Federelement (41) in Bezug auf die Steuernockenschwenkachse (21) eine Krümmung aufweist, die größer ist als eine Krümmung eines konzentrisch zur Steuernockenschwenkachse (21) vorliegenden geometrischen Teilkreises (45) auf Höhe des Federelements (41), oder der Steuernocken (20) einen sich zu einem konzentrisch zur Steuernockenschwenkachse (21) vorliegenden geometrischen Teilkreis (45) nach radial außen erstreckenden Steg (46) aufweist, von welchem sich bezogen auf die Steuernockenschwenkachse (21) quer zur radialen Richtung ein Federelement (41), bevorzugt beidseitig des Stegs (46) jeweils ein Federelement (41), erstreckt, wobei das zumindest eine Federelement (41) bevorzugt als gekrümmte Blattfeder, in Form eines bezogen auf die Steuernockenschwenkachse (21) radial federnd gelagerten Bolzens (47) oder in Form eines Biegebalkens mit freiem Ende (411) ausgebildet ist.

13. Klammervorrichtung (1) gemäß Anspruch 11 oder 12, **dadurch gekennzeichnet, dass** die Laufrolle (42) exzentrisch zu einer Lagermittelachse (44) eines an einer Trägerplatte (2) drehfest angebrachten Lagerbolzens (48) am Lagerbolzen (48) gelagert ist, wobei bevorzugt die Orientierung des Lagerbolzens (48) um dessen Lagermittelachse (44) veränderbar ist, und/oder bevorzugt die Lagerrolle (42) bezogen auf die Steuernockenschwenkachse (21) in radialer Richtung auf den Steuernocken (20) vorgespannt ist.

14. Klammervorrichtung (1) gemäß Anspruch 11, **dadurch gekennzeichnet, dass** die Vorspanneinrichtung (40) als magnetische Vorspanneinrichtung (40) ausgebildet ist, wobei bevorzugt ein an einer Trägerplatte (2) angeordneter Anschlag (3) einen Magneten (50) oder ein magnetisierbares und/oder ferromagnetisches Material aufweist, welcher beziehungsweise welches mit zumindest einem am Steuernocken (20), bevorzugt an einem sich bezogen auf die Steuernockenschwenkachse (21) am Steuernocken (20) nach radial außen erstreckenden Arm (24), vorgesehenen Magnetelement (51) oder magnetisierbaren und/oder ferromagnetischen Material derart wechselwirkt, dass aufgrund einer magnetischen Anziehungskraft zwischen den vorgenannten der Steuernocken (20) in zumindest einer Endposition gehalten ist.

15. Klammervorrichtung (1) gemäß einem der vorstehenden Ansprüche, **dadurch gekennzeichnet, dass** der Steuerbolzen (32) in Richtung der Steuernockenschwenkachse (21) gesehen an einem stirnseitigen Ende einen Sicherungssteg (323) zum Halten des Steuernockens (20) an zumindest einem Klammerarm (10) aufweist, wobei der Sicherungssteg (323) bevorzugt ausgebildet ist in Form eines bevorzugt konzentrisch zur Längsmittelachse (325) des Steuerbolzens (32) angeordneten, bevorzugt kreisförmigen Flansches, dessen Erstreckung senkrecht zur Steuernockenschwenkachse (21), bevorzugt dessen Außendurchmesser, größer ist als eine Breite der dem Steuernocken (32) zugeordneten Langlochnut (31) quer zu deren Längserstreckung (310), und/oder in Form eines Verbindungssteges zwischen den zwei Steuerbolzen (32) ausgebildet ist.
